(19)

**Europäisches Patentamt**

**European Patent Office**

**Office européen des brevets**

(11) **EP 4 564 734 A1**

(12) **EUROPEAN PATENT APPLICATION**

(43) Date of publication:
04.06.2025 Bulletin 2025/23

(21) Application number: 23212485.9

(22) Date of filing: 28.11.2023

(51) International Patent Classification (IPC):
*H04L 9/06* (2006.01)    *G06F 17/00* (2019.01)
*H04L 9/32* (2006.01)

(52) Cooperative Patent Classification (CPC):
**H04L 9/32; G06F 17/18; H04L 9/0656;**
**H04L 9/3226; H04L 9/3247;** H04L 2209/84

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Continental Automotive Technologies**
**GmbH**
**30175 Hannover (DE)**

(72) Inventor: **Dr. Pammu, Ali Akbar**
**81739 München (DE)**

(74) Representative: **Continental Corporation**
**c/o Continental Automotive Technologies GmbH**
**Intellectual Property**
**Putzbrunnerstr. 69**
**81739 München (DE)**

(54) **APPARATUS, DATA CARRIER, COMPUTER PROGRAM/S, AND METHODS FOR AUTHENTICATING A MESSAGE**

(57)    Embodiments of the present disclosure relate to an apparatus, a data carrier, computer program/s, and methods (100, 200) for authenticating a message. In particular, embodiments provide a method for authenticating a message from a first device to a second device. The method suggests that the first device obtains a predefined generation function for generating elements of a first vector by the first device and a second vector by the second device. Further, the first device generates the first vector using the number generation function. Also, the first device transmits the first vector to the second device for the second device to generate a second vector using the same number generation function to authenticate the message based on a correlation of the first and the second vector and a predefined condition to the correlation.

100

```
┌─────────────────────────────────────────────┐
│   Obtaining a predefined generation function │──── 110
└─────────────────────────────────────────────┘
                      │
                      ▼
┌─────────────────────────────────────────────┐
│          Generating the first vector         │──── 120
└─────────────────────────────────────────────┘
                      │
                      ▼
┌─────────────────────────────────────────────┐
│  Transmitting the first vector to the second device │──── 130
└─────────────────────────────────────────────┘
```

Fig. 1

EP 4 564 734 A1

## Description

Embodiments of the present disclosure relate to an apparatus, a data carrier, computer program/s, and methods for authenticating a message. In particular, but not exclusively, embodiments relate to an authentication concept for communication between a vehicle and a mobile device.

Recent attacks on car key systems exploit the vulnerability of a rolling code counter that can be replayed by an attacker to successfully open a door of the vehicle maliciously. One main drawback of the current mechanism is that data transmitted from car key (i.e., key fob) is predictable based on its rolling code counter. The attacker can simply record the communication and replay the message in later time.

Hence, there may be a demand of an improved authentication concept.

The demand may be satisfied by the subject-matter of the present disclosure.

Embodiments of the present disclosure provide a method for authenticating a message from a first device (transmitter) to a second device (receiver). The method proposes that the first device obtains a predefined generation function for generating elements of a first vector by the first device and a second vector by the second device. Further, the first device generates the first vector using the number generation function. Also, the first device transmits the first vector to the second device for the second device to generate a second vector using the same number generation function to authenticate the message based on a correlation of the first and the second vector and a predefined condition to the correlation. So, compared to rolling code counter mechanisms, the proposed authentication method provides not only for a coordinated generation of a counter but of vectors whose correlation need to satisfy the predefined condition for successful authentication. To this end, the generation function may be stored on the first device upfront and kept secret from any third parties, e.g., potential attackers. For this, the generation function may be stored using a (dedicated) hardware mechanism such as Hardware Secure Mechanism (HSM), Secure Hardware Encryption (SHE), and/or a Trusted Execution Environment (TEE).

So, in practice, attackers may not be able to anticipate the vector to trick the authentication mechanism, e.g., such as in replay attacks on rolling code counters. Hence, the proposed approach may provide more security in the authentication of a message.

The correlation, e.g., is indicative of the Pearson correlation of the first and the second vector.

In some embodiments, the first device may receive, from the second device, information on one or more coefficients of the function. This, e.g., is done when the first and the second device connect with each other, e.g., during startup. Accordingly, the first device generates the first vector based on the generation function and the one or more coefficients of the function. In this way, the coefficients change to make it even more difficult for an attacker to trich the proposed authentication mechanism.

In practice, generating the first vector may comprises generating random numbers using a random number generator and obtaining the elements of the first vector using the generation function and the random numbers as input to the generation function.

In embodiments, the condition may include a condition to a coordinate system quadrant of the correlation, the method may further include receiving information on the condition to the coordinate system quadrant from the second device, and generating the first vector may comprise determining a gradient of the first vector based on the coordinate system quadrant. So, the authentication, e.g., is only successful if the coordinate system quadrant of the correlation corresponds to the predefined coordinate system quadrant and fails otherwise. In this way, replay attacks, where the correlation exhibits the wrong coordinate system quadrant, will be unsuccessful.

Optionally, the method further comprises determining a first counter for the first vector, transmitting the counter together with the first vector to the second device, and determining a second counter for the second vector, wherein the first and the second counter are determined independently. In this way, another dimension of authentication parameters is introduced such that it is even more difficult to trick the authentication mechanism.

In some embodiments, the first device, e.g., transmits multiple messages and respective vectors, wherein the correlation (vector) rotates (clockwise or counter-clockwise). In such embodiments, the counter, e.g., increases based on a number of cycles (360° rotation) of the correlation vector. In practice, e.g., the counter increases with each cycle.

In some embodiments, the method further comprises determining a gradient value for the first vector based on an action to be performed by the second device. Some applications, e.g., may offer different functions and corresponding actions. In automotive applications, e.g., the message may trigger that a vehicle unlocks a door, turns on an engine, and/or sounds its horn. To this end, the first device, e.g., adapts the gradient value accordingly, i.e., such that a desired action is performed. In this way, the vector not only serves for authentication but also for communication.

In automotive applications, the second device, e.g., is a vehicle or a component thereof and the first device may be a separate device which is not permanently installed on the vehicle such as a key fob or a mobile device configured to function as a remote control for the vehicle.

A skilled person having benefit from the present disclosure will understand that a respective method for authentication may be applied in the second device. Accordingly, embodiments of the present disclosure provide a method for authenticating a message from a first device by a second device. According to the method, the second device obtains a predefined generation function for generating elements of a first vector by the first device and a second vector by the second device. As well, the second device obtains information on at least one predefined condition to a correlation between the first and the second vector. Also, the second device receives the first vector from the first device, generates the second vector using the same number generation function, and authenticates the message based on the correlation of the first and the second vector and the condition to the correlation. As outlined in more detail above, this provides more security, in particular, against replay attacks.

In some embodiments, the second device may transmit information on one or more coefficients of the function to the first device for the aforementioned reasons and benefits. Accordingly, the second device generates the second vector based on the number generation function and the one or more coefficients.

As mentioned above, the condition may include a condition to a coordinate system quadrant of the correlation. In such embodiments, the method may include transmitting information on the coordinate system quadrant to the first device for the first device to generate the first vector based on the coordinate system quadrant. Accordingly, generating the second vector may comprise determining a gradient of the second vector based on the coordinate system quadrant and authenticating the message may comprise checking if the correlation is within the predefined quadrant. If so, the authentication may be successful and unsuccessful otherwise.

Optionally, the method further comprises receiving, from the first device, a counter for the first vector, and wherein authenticating the message comprises authenticating the message further based on the counter. In this way, the protection against attacks may be further strengthened.

In practice, the condition may further include a condition to a correlation value of the correlation and authenticating the message may comprise authenticating the message based on the correlation value of the correlation. In practice, e.g., a minimum threshold is specified for the correlation value and the authentication is successful if the correlation value exceeds the threshold. Otherwise, the authentication may fail.

Embodiments implementing authentication based on the correlation value may further provide for different thresholds for different actions, e.g., such that the threshold is higher for safety-relevant actions (e.g., starting the engine) than for non-safety-relevant actions (e.g., sounding the horn). In this way, the security is even higher for safety-relevant actions to avoid material or personal damage.

Optionally, the method further comprises determining a gradient value for the second vector based on an action to be performed by the second device.

Further embodiments provide one or more computer programs comprising instructions which, when the one or more computer programs are executed by a computer, cause the computer to carry out any one of the methods proposed herein.

As well, embodiments of the present disclosure provide a non-transitory machine-readable data carrier and/or a download product with the one or more computer programs proposed herein.

Other embodiments provide an apparatus comprising one or more interfaces for communication and a data processing circuit configured to execute any one of the methods proposed herein.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings

| | |
|---|---|
| Fig. 1 | shows a flow chart schematically illustrating an embodiment of an authentication method for a receiver of a message; |
| Fig. 2 | shows a flow chart schematically illustrating an embodiment of an authentication method for a transmitter of a message; |
| Fig. 3a, 3b, 3c | show a flow chart schematically illustrating a use case of the proposed approach for communication between a vehicle and a mobile device; |
| Fig. 4 | exemplarily visualizes the authentication according to an embodiment of the proposed approach; |
| Fig. 5 | exemplarily visualizes vectors in the event of an unsuccessful authentication; and |
| Fig. 6 | shows a block diagram schematically illustrating an embodiment of an apparatus according to the present disclosure. |

Car Control is commonly used in modern vehicles to control the vehicle remotely without human (e.g., driver or passenger) present inside the vehicle. A common feature used in Car Control serves for locking/unlocking a door and/or a starting an engine of the vehicle, which are the main target of the attackers. In the last decades, a million of vehicles have been compromised due to the lack of security mechanisms in locking/unlocking the door by using a conventional method. Conventional authentication mechanisms use a so-called "rolling code counter". However, the rolling code counter is vulnerable to replay attacks that can be replayed by attacker to successfully open the door maliciously. The main drawback of the current mechanism is that the data transmitted from a mobile device (e.g., key fob, smart phone) is predictable with its rolling code counter. The attacker can simply record the communication and replay the message at a later time.

In a rolling code system, a transmitter and receiver share a synchronized code sequence. Every time the user presses a button, the transmitter sends the current code, and the receiver, after accepting and validating the code, increments to the next one in the sequence. This constant changing of codes makes it challenging for attackers to predict or replay the transmitted signals successfully.

However, the vulnerability to replay attacks lies in the potential interception and storage of the transmitted codes. If an adversary manages to capture a valid rolling code, they can replay it later to gain unauthorized access. To counter this vulnerability, some systems implement additional security measures like time-sensitive codes or device authentication. So, current security mechanisms, e.g., to secure the communication between a mobile device and a vehicle or receiver thereof (e.g., ECU in the vehicle) is relying on a monotonic counter from both the mobile device and the vehicle which is predictable by attacker.

Despite some countermeasures, certain weaknesses can still be exploited. If an attacker successfully intercepts and replays a rolling code within a short timeframe or if the system lacks robust encryption, they could potentially compromise the security of the system.

One objective of the present disclosure is therefore to provide an improved authentication mechanism that is more robust against replay attacks.

One idea of the proposed authentication mechanism is to generate two vectors independently by a first and a second device, e.g., by a receiver and a transmitter, based on a predefined function. Thus, the two vectors correlate to each other if the correct function is used. Therefore, if only authorized or trusted devices have access to the number generation function, they can be authenticated by a correlation of the vectors.

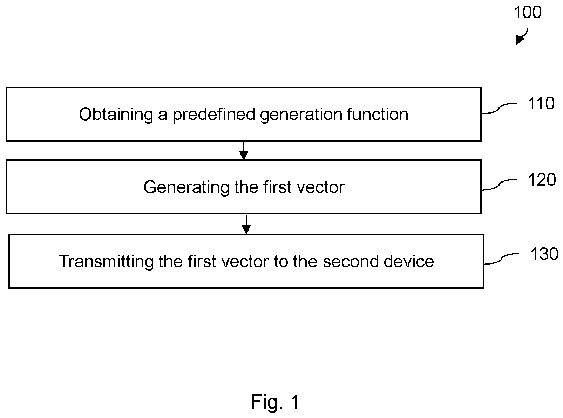

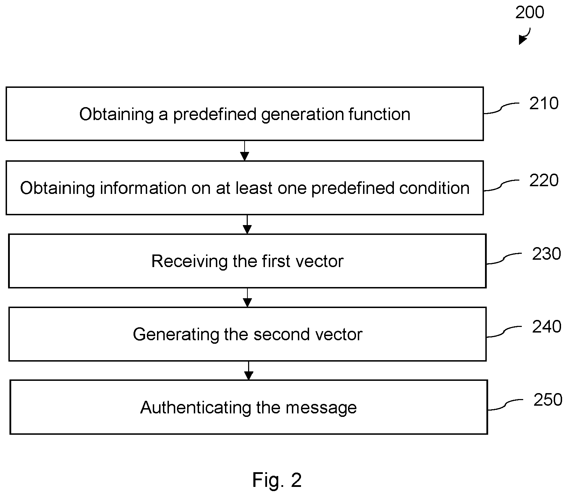

Exemplary methods for a receiver and a transmitter are schematically visualized by Figs. 1 and 2.

Fig. 1 schematically illustrates an embodiment of a method 100 for authenticating a message from a first device to a second device.

The method 100 comprises the following steps by the first device:
Obtaining 110 a predefined generation function for generating elements of a first vector by the first device and a second vector by the second device. Further, method 100 comprises generating 120 the first vector using the number generation function.

A skilled person having benefit will appreciate that the generation function can be, e.g., any arbitrary mathematical function such as a quadratic equation of cubic equation. For generating the elements of the vectors, e.g., random numbers may be used as input to the function and the results may be used as elements of the vectors. The input, e.g., is generated using a random number generator. In context of the present disclosure, any data including at least two numbers may be seen as vector.

Further, method 100 suggests transmitting 130 the first vector to the second device for the second device to generate a second vector using the same number generation function to authenticate the message based on a correlation of the first and the second vector and a predefined condition to the correlation.

The first and the second device, e.g., are communicatively coupled to communicate the first vector. In practice, they may be configured to establish a wireless connection (e.g., via Bluetooth, Wireless Local Area Network, and/or the like) to each other and may communicate the first vector wirelessly. The skilled person will appreciate that the proposed approach is not limited to wireless connections, though, and may be also applied for any wired connections.

In this way, the first device may authenticate itself or any messages to the second device. For this, method 200 (see Fig. 2) provides a solution to authenticate the first device or its message by the first vector through the second device.

As can be seen from Fig. 2, method 200, to this end, suggests obtaining 210 a predefined generation function (see above) for generating elements of a first vector by the first device and a second vector by the second device. In practice, the (number) generation function, e.g., is stored on and obtained from a storage of the second device or outside the second device.

As per the aforementioned idea, the authentication through the second device is based on a correlation of the first and the second vector. Accordingly, method 200 comprises obtaining 220 information on at least one predefined condition to a correlation between the first and the second vector.

To this end, method 200 further suggests receiving 230 the first vector from the first device by the second device and generating 240 the second vector using the same number generation function. In practice, this is done in a similar or the same way as for the first vector (e.g., using a random number generator to generate input for the number generation function whose results are then used as elements of the vector).

According to method 200, this is followed by authenticating 250 the message based on the correlation of the first and the second vector and the condition to the correlation.

As the skilled person will appreciate, for this, various correlations and/or ways to determine the correlation may be applied. In practice, e.g., the Pearson correlation is used for this.

In practice, the correlation may be a vector having a certain length and direction. In this case, the length may indicate a correlation value while the direction indicates a system coordinate quadrant of the correlation.

As outlined in greater detail later, the condition to the correlation, e.g., is satisfied if it has at least a minimum correlation value and/or if it is in a certain predefined coordinate system quadrant. If so, the authentication is successful. Otherwise, the authentication is not successful. In this event, a respective message or request from the first device may be refused, discarded, and/or ignored. Additionally, the second device may inform a user that a communication with another device failed and/or that an attack may have occurred.

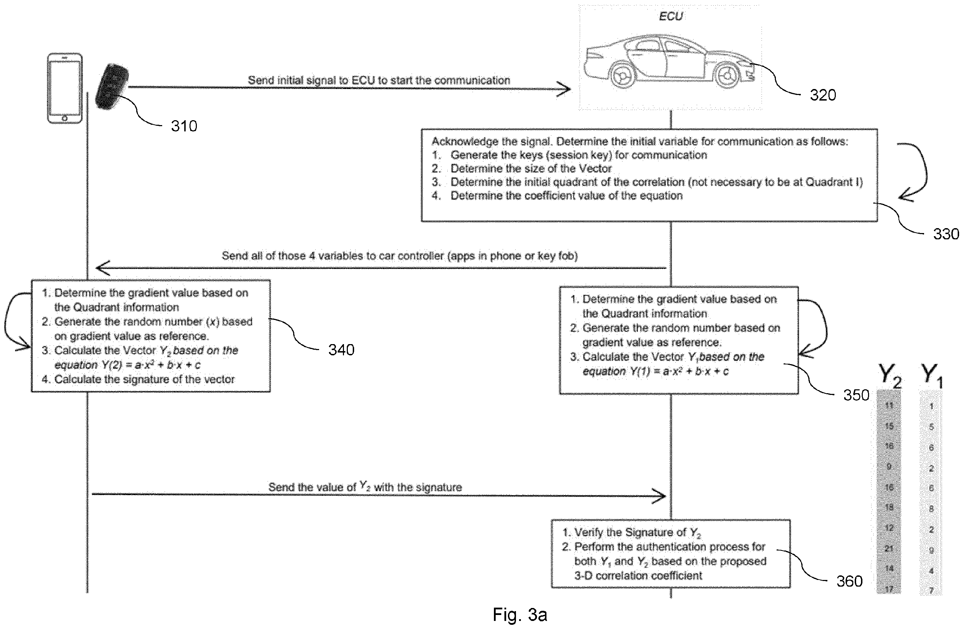

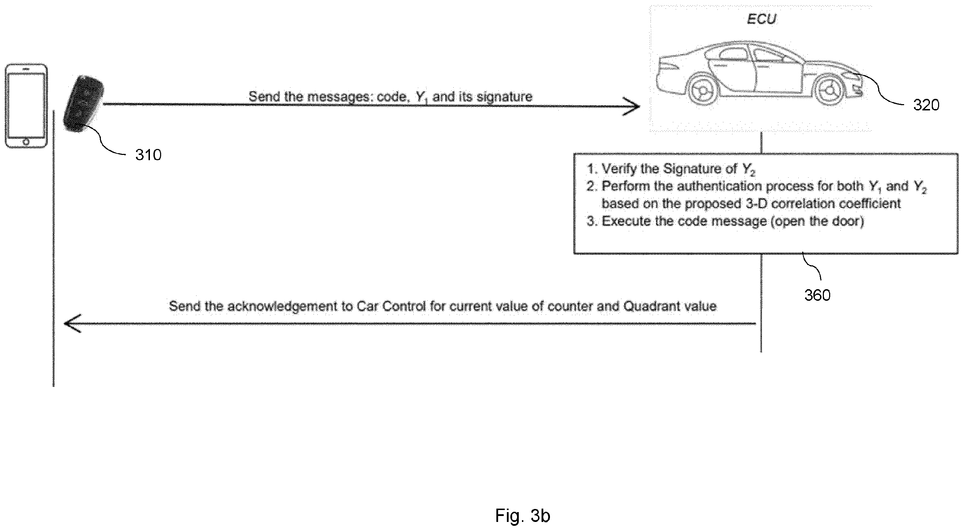

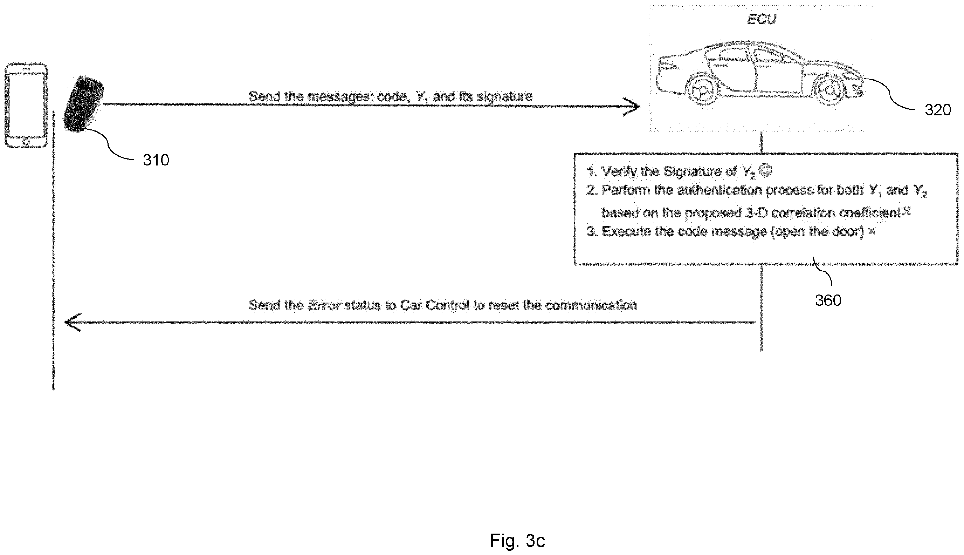

Further (optional) features and aspects of the present disclosure are described in more detail below with reference to Figs. 3a, 3b, and 3c where an exemplary use case is shown.

In the use case of Fig. 3a-3c, the proposed approach is applied for communication between a mobile device 310 and a vehicle 320. In practice, the mobile device 310 can be any mobile device such as a key fob, car key, or a mobile phone which may be configured to control the vehicle 320 or at least some functions of it. The vehicle 320, may be any kind of vehicle such as a car, a truck, bus, and/or the like.

As mentioned earlier, for a rolling code counter, an attacker may apply a replay attack to intercept and replay the communication between mobile device 310 and the vehicle 320. In applications, the communication, e.g., is used to get access to the vehicle 320 or to operate any other functions of the vehicle 320 (from remote). So, potential attackers may get undesirably access to the vehicle 320 and/or may control other functions.

To mitigate the aforementioned security vulnerability, the proposed approach provides for a multidimensional authentication mechanism. In embodiments, each of the dimensions can be seen as a condition that need to be satisfied for a successful authentication. In some embodiments, the proposed approach provides for three dimensions/conditions, whereas one of the conditions relate to a quadrant of a correlation between vectors, which is why embodiments of the present disclosure are herein referred to as "3-D Quadrant-Correlation based authentication".

As previously mentioned, in the proposed approach, the authentication uses the correlation (can be a string value) of vectors generated by the mobile device 310 and the vehicle 320. In this way, replay attacks can be blocked. Authentication mechanism according to the present disclosure, e.g., uses a correlation value, a quadrant of the correlation, a counter, a slope, or gradient, and/or a threshold correlation.

In practice, the vehicle 320, e.g., is equipped with an ECU (also referred to herein as "Car Controler") for communication with the mobile device 310. In particular, wireless communication maybe used for this.

For communication, the mobile device 310 may first send an initial signal to the ECU to start the communication.

The ECU, in a next step 330, may then acknowledge the initial signal and determine initial variables for communication. In doing so, it generates keys (or a session key) for communication, determines a size (number of elements) of the vectors, a (initial) (coordinate system) quadrant of the correlation (for examples but not necessarily, quadrant I), and determines the one or more coefficients (coefficient values) of the (number) generation function. Then, the ECU sends those variables to the mobile device 310. The mobile device 310, then, in a next step 340 uses the variables to generate a vector $Y_2$ (also referred to herein as "first vector") for the authentication to the ECU. In doing so, the mobile device 310 determines the gradient value of the vector $Y_2$ based on the information on the quadrant of the correlation (as outlined in more detail below with reference to the table below). Further, the mobile device 310 generates an input x for generating the vector $Y_2$ based on the gradient value, e.g., such that the vector $Y_2$ has (approximately) the determined gradient value. Then, the mobile device 310 generates the vector $Y_2$ using the generation function (e.g., a random number generator) and the input x to the generation function and signs the vector $Y_2$ with a signature. In the present example, the number generation function, e.g., is:

$$Y_2(x) = a \cdot x^2 + b \cdot x + c,$$

wherein x denotes a respective random number for the calculation o a respective element and *a*, *b*, and *c* denote the coefficients of the number generation function.

Likewise, in step 350, the ECU generates a vector $Y_1$ by determining the gradient value of the vector $Y_1$ based on the previously defined system coordinate quadrant, i.e., such that the correlation between vector $Y_1$ and vector $Y_2$ is within that quadrant if vector $Y_2$ has been generated by an authorized device. Then, random numbers are generated using a random number generator and the gradient value as reference such that the vector $Y_1$ has the predefined gradient. Next, the elements of the vector $Y_1$ is generated based on the same number generation function as $Y_2$ and the generated random numbers.

In a further step, the mobile device 310 sends the signed vector $Y_2$ to the ECU in a message.

Then, the ECU authenticates the message based on the vector $Y_2$ in step 360. For this, the ECU verifies the signature, i.e., verifies that message has been signed by the mobile device 310. Further, the ECU executes the authentication for the vectors $Y_1$ and $Y_2$ based on their correlation.

If the message is authenticated successfully, i.e., if it is considered authentic and not malicious, the ECU causes an action requested through the message, e.g., that the vehicle 320 unlock one or more doors or that the vehicle 320 starts its engine. Otherwise, the ECU may consider the message malicious and may refrain from causing the requested action so that an attacker, e.g., does not get access to the vehicle 320. The requested action, e.g., can be determined by the ECU from a gradient value or slope of the vector from the mobile device.

An exemplary scenario for a successful authentication is laid out in more detail below with reference to Fig. 3b.

As can be seen from Fig. 3b, the vehicle 320 or ECU, in the event of a successful authentication, may send an acknowledgement to the mobile device 310. In doing so, the mobile device 310 may receive a coordinate system quadrant for the next authentication as well as a counter that may be added to the vector for even more security as laid out in more detail later.

Otherwise, the mobile device 310 may receive an error message from the vehicle 320, if the authentication failed, as can be seen in Fig. 3c.

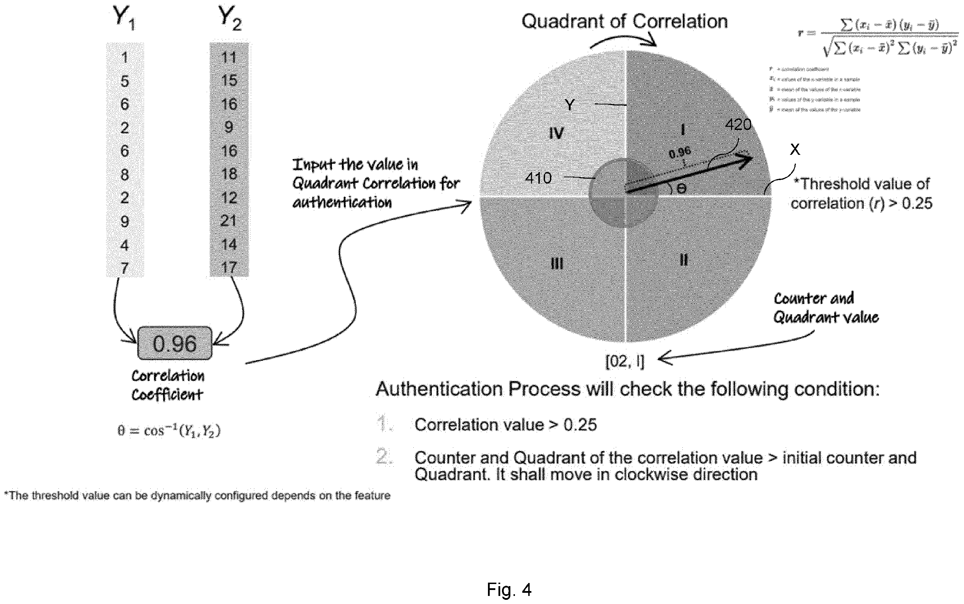

More details of the authentication are described in more detail below with reference to Fig. 4 where an authentication procedure is exemplarily shown for example vectors. In particular, Fig. 4 shows a successful authentication.

As can be seen, for the authentication, the coordinate system quadrants may be numbered clockwise, starting with I in the upper right of four quadrants separated by an abscissa X and an ordinate Y. In the present example, the initial predefined coordinate system quadrant is, e.g., quadrant I. So, the mobile device 310, e.g., receives the information that the correlation shall be in quadrant I.

In practice, the correlation may be the Pearson correlation. For this and other correlation metrics, the coordinate system quadrant may depend on the gradient, in particular, on the sign of the vectors, as illustrated in table 1. Both of the vectors, e.g., have to be positive or negative, i.e., have a positive or negative gradient, if the predefined quadrant of the correlation is quadrant I or III, respectively. For other quadrants of the correlation, e.g., quadrant II or IV, the vectors may need to have a different gradient, e.g., that one of the vectors is negative while the other one is positive (see table 1 below).

Table 1

| $Y_1$ | $Y_2$ | Quadrant Correlation |
|-------|-------|----------------------|
| + | + | I |
| + | - | IV |
| - | + | II |
| - | - | III |

In the present example, the predefined quadrant, e.g., is quadrant I. However, in other examples, the quadrant may be also any other quadrant.

If the quadrant is quadrant I, e.g., vector $Y_2$ as well as $Y_1$ are generated such that they only contain positive elements (see examples of $Y_2$ and $Y_1$ in Fig. 4). For this, the one or more coefficients may be positive, and the random number generator may be adapted accordingly.

For those vectors, the correlation 420, e.g., is as shown in Fig. 4 another vector with a certain length and slope. In context of the present disclosure, the length is indicative of the correlation value and the slope may be also referred to herein as gradient of the correlation.

For the Pearson correlation, the correlation value r of the correlation 420, e.g., is defined as follows:

$$r = \frac{\sum (x_i - \bar{x})(y_i - \bar{y})}{\sqrt{\sum (x_i - \bar{x})^2 \sum (y_i - \bar{y})^2}},$$

wherein $x_i$ and $y_i$ denote the elements of the vectors $Y_2$ and $Y_1$, respectively, and $\bar{x}$ and $\bar{y}$ denote their mean/-average.

The slope $\theta$ of the correlation 420, e.g., is indicative of an angle between the vectors $Y_2$ and $Y_1$ which may be defined as follows:

$$\theta = \cos^{-1}(Y_1, Y_2),$$

wherein the slope depends on an angle between $Y_2$ and $Y_1$ and may be defined as angle between the correlation 420 and the abscissa X (see Fig. 4).

Now, for the authentication, the correlation is checked as follows:

It is checked if the correlation value (length of the correlation (vector)) is equal or greater than a predefined threshold 410 for it. In the present case, the threshold 410, e.g., is 0.25 (see circle around coordinate origin) and the correlation value can assume any value between -1 and +1. However, in other implementations, another threshold and/or another value space may be chosen. In the present case, the correlation value is 0.96 for $Y_2$ and $Y_1$. Thus, the correlation value exceeds the threshold of 0.25 and may lead to a successful authentication. Otherwise, if the correlation value is lower than the threshold, the authentication will fail.

In other words, if the correlation value fall in the area of "invalid correlation" (see the circle around the coordinate origin), the authentication will fail. The invalid area (threshold) may be configurable and my depend on a initial set up and type of communication. For example: the safety relevant communication may setup the threshold of 25% to 35% (0.25 ≤ r or 0.35 ≤ r). For low feature without safety concern such as activating the external light when the car in parking mode can be configured to 5% to 10% (0.05 ≤ r or 0.10 ≤ r).

Further, it is checked if the correlation is in the predefined coordinate system quadrant. For this, e.g., the slope is used. In the present example, the slope, e.g., is between 0° and 90°. So, the correlation is in the predefined quadrant I.

Since the correlation is in the predefined quadrant and exceeds the predefined threshold for the correlation value, the authentication may be successful. Otherwise, if at least one of the above criteria is not met, the authentication is unsuccessful.

As further indicated in Fig. 4, the predefined system coordinate quadrant may rotate clockwise for further authentications. So, in further authentications, the system coordinate quadrant may be quadrant II, III, or IV.

As well, a counter may be used to indicate when the system coordinate quadrant covered one round. So, in embodiments, the counter, e.g., is incremented each time when the system coordinate quadrant covered one round or cycle. Preferably, the system coordinate quadrant does not change regularly, i.e., in same step sizes but irregularly.

In the present example, the quadrant is then, e.g., specified by [02, I] wherein the Arabic number denotes the counter and the Roman number denotes the quadrant. For a further authentication, the next quadrant, e.g., is [02,IV] or [03, I]. Then, the authentication is (only) successful if, further, the system coordinate quadrant rotated clockwise and if the counter is equal or higher than the counter in the previous authentication. In other examples, the correlation vector may be supposed to rotate counter-clockwise.

So, the counter may only increase. Hence, for even more security, the counter may be compared to previous counters in the authentication. In practice, it is, e.g., checked if the counter is equal or higher than in the previous authentication. In practice, the counter, e.g., is transmitted together with the vector $Y_2$ or a respective message.

So, the proposed example provides for three conditions to be fulfilled for a successful authentication. The conditions can be also seen as "dimensions". Accordingly, the proposed approach may be referred to as "3-D (three-dimensional) Quadrant-Correlation based authentication".

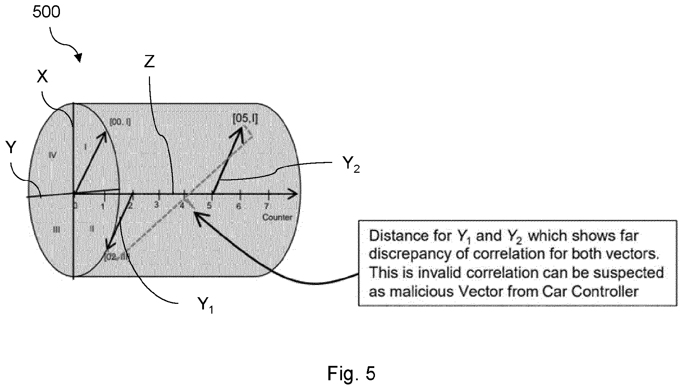

Further details are described in more detail below with reference to Fig. 5.

Fig. 5 shows an example of an unsuccessful authentication. As can be seen, $Y_1$ and $Y_2$ are uncorrelated, and their counter differs by more than two (see z-axis Z indicating the counter). Accordingly, the above conditions are not fulfilled and the authentication will fail. So, a respective message may be seen malicious and a user may be informed about that.

To summarize and recap the proposed approach, the embodiments of the present disclosure may comprise:

1. Performing the correlation of two set of data (i.e.,

vectors) to verify the authenticity of the communication

2. Authentication variables may include: value of correlation, direction of correlation (i.e., quadrant correlation) in clockwise direction, and counter correlation

3. The authentication variable is dynamically configured to highly protect against any form of attacks (e.g., replay attacks)

4. The proposed algorithm can be performed much faster (~1.2 second) compared to conventional counting methods (i.e., >10 second).

In the authentication process provides for at least two vectors to compute the correlation value. The size of the two vectors (Y1, Y2) is predetermined by the ECU at the initial start of the vehicle (i.e., early morning when the engine is firstly started). The size of the vector for each time the engine is initially started does not need to be the same each time and determined randomly by both ECU and mobile device. The initial quadrant in which the correlation shall be generated is also pre-determined by both ECU and the mobile device. To achieve so, the sign and values of gradient/slope of the vector shall be determined accordingly by ECU and Car controller. Table 1 shows the possible sign (value) of vectors that is Internal corresponding to the quadrant correlation. The ECU will decide on which quadrant to be started and send the information to the Car controller. The gradient value (i.e., $0 < \text{gradient} \leq 1.0$) is determined independently for both ECU and mobile device according to the mode of service (e.g., lock/unlock the door, trunk, or start the engine etc.). The quadrant value is not necessarily to be started at first quadrant as this is predictable by attacker and to protect further against replay attacks. Another step at initial start-up is to determine the coefficient value of the equation which is used to generate the vector component from random number.

So, in an exemplary use case scenario, the steps are the following:
Step 1: ✔ Determine the size of the Vector ✔ Determine the initial quadrant of the correlation (not necessary to be at Quadrant I) ✔ Determine the coefficient value of the equation Step 2: ✔ Determine the gradient value based on the Quadrant information. For instance: if decided to be Quadrant II, Y1 shall be + (gradient value) and Y2 shall be - (gradient value). See Table 1. The gradient value will be dependent on the mode of communication, such as open the trunk is 0.82 and 0.90 for Y1 and Y2 respectively. For starting the engine, it could be 0.91 and 0.95 for Y1 and Y2 respectively. ✔ Generate the random number based on gradient value as reference. This could use hardware accelerator and specific software/hardware module. ✔ Calculate the Vector value using the pre-determined equation and the random number ✔ Calculate the signature of the vector value using symmetric or asymmetric algorithms and encrypt it (optional) Step 3: ✓ Send the vector Y2 to the vehicle or ECU ✓ ECU Computes the correlation value and degree of Y1 and Y2 ✓ Check the correlation value, quadrant, and counter value ✓ If verified, the next action is to execute the command, otherwise the system will be terminated.

It should be noted that the proposed approach described for automotive applications may be also used for any other use cases of authentication, e.g., for any other access systems (e.g., for house doors).

The proposed approach may be implemented in various ways. In particular, the proposed approach may be implemented in a computer program or computer-implemented method.

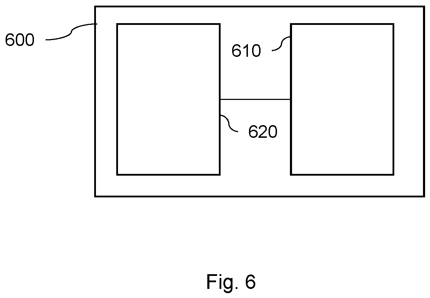

As well, it may be implemented in an apparatus, as laid out in more detail below with reference to Fig. 6.

Fig. 6 shows a block diagram schematically illustrating an embodiment of such an apparatus 600. The apparatus comprises one or more interfaces 610 for communication and a data processing circuit 620 configured to execute the proposed method.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programable gate arrays, one or more central, and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

In embodiments, the proposed apparatus may be installed in an access system (e.g., for a vehicle or a house door) including a receiver and a mobile device. So, embodiments may also provide an access system. In automotive applications, the apparatus, e.g., is installed in a vehicle and/or a mobile device separate from the vehicle. The apparatus, e.g., may be implemented in an ECU, a smartphone, a tablet, or wearable.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for authenticating a message from a first device to a second device, the method (100) comprising the following steps by the first device:

   obtaining (110) a predefined generation function for generating elements of a first vector by the first device and a second vector by the second device;
   generating (120) the first vector using the number generation function; and
   transmitting (130) the first vector to the second device for the second device to generate a second vector using the same number generation function and authenticate the message based on a correlation of the first and the second vector and a predefined condition to the correlation.

2. The method (100) of claim 1, wherein generating the first vector comprises:

   generating random numbers using a random number generator; and
   obtaining the elements of the first vector using the generation function and the random numbers as input to the generation function.

3. The method (100) of claim 1 or 2, wherein the condition includes a condition to a coordinate system quadrant of the correlation, wherein the method (100) further includes receiving information on the coordinate system quadrant of the correlation from the second device, and wherein generating the first vector comprises determining a gradient of the first vector based on the coordinate system quadrant.

4. The method (100) of any one of the preceding claims, wherein the method (100) further comprises determining a first counter for the first vector, transmitting the counter together with the first vector to the second device, and determining a second counter for the second vector, wherein the first and the second counter are determined independently.

5. The method (100) of any one of the preceding claims, wherein the method (100) further comprises determining a gradient value for the first vector based on an action to be performed by the second device.

6. The method (100) of any one of the preceding claims, wherein the correlation is indicative of the Pearson correlation of the first and the second vector.

7. The method (100) of any one of the preceding claims, wherein the second device is a vehicle or a component thereof, and wherein the first device is a separate device which is not permanently installed on the vehicle.

8. A method (200) for authenticating a message from a first device by a second device, the method (200) comprising the following steps by the second device:

   obtaining (210) a predefined generation function for generating elements of a first vector by the first device and a second vector by the second device;
   obtaining (220) information on at least one predefined condition to a correlation between the first and the second vector;
   receiving (230) the first vector from the first device;
   generating (240) the second vector using the same number generation function; and
   authenticating (250) the message based on the correlation of the first and the second vector and the condition to the correlation.

9. The method (200) of claim 8, wherein the condition includes a condition to a coordinate system quadrant of the correlation, wherein the method (200) further comprises transmitting the information on the coordinate system quadrant to the first device for the first device to generate the first vector based on the coordinate system quadrant, and wherein generating the second vector comprises determining a gradient of the second vector based on the coordinate system quadrant, and wherein authenticating the message comprises checking if the correlation is within the predefined quadrant.

10. The method (200) of claim 8 or 9, wherein the method (200) further comprises receiving, from the first device, a counter for the first vector, and wherein authenticating the message comprises authenticating the message further based on the counter.

11. The method (200) of any one of the claims 8 to 10, the condition includes a condition to a correlation value of the correlation, and wherein authenticating the message comprises authenticating the message based on the correlation value of the correlation.

12. The method (200) of any one of the claims 8 to 11, wherein the method (200) further comprises determining a gradient value for the second vector based on an action to be performed by the second device.

13. One or more computer programs comprising instructions which, when the one or more computer programs are executed by a computer, cause the computer to carry out a method (100, 200) of any one of the preceding claims.

14. A non-transitory machine-readable data carrier and/or a download product with the one or more computer programs of claim 13.

15. An apparatus (600) comprising:

    one or more interfaces (610) for communication; and
    a data processing circuit (620) configured to execute a method (100, 200) of any one of the claims 1 to 12.

100

Obtaining a predefined generation function — 110

Generating the first vector — 120

Transmitting the first vector to the second device — 130

Fig. 1

200

Obtaining a predefined generation function — 210

Obtaining information on at least one predefined condition — 220

Receiving the first vector — 230

Generating the second vector — 240

Authenticating the message — 250

Fig. 2

ECU

320

Send initial signal to ECU to start the communication

310

Acknowledge the signal. Determine the initial variable for communication as follows:
1. Generate the keys (session key) for communication
2. Determine the size of the Vector
3. Determine the initial quadrant of the correlation (not necessary to be at Quadrant I)
4. Determine the coefficient value of the equation

330

Send all of those 4 variables to car controller (apps in phone or key fob)

1. Determine the gradient value based on the Quadrant information
2. Generate the random number ($x$) based on gradient value as reference.
3. Calculate the Vector $Y_2$ based on the equation $Y(2) = a \cdot x^2 + b \cdot x + c$
4. Calculate the signature of the vector

340

1. Determine the gradient value based on the Quadrant information
2. Generate the random number based on gradient value as reference.
3. Calculate the Vector $Y_1$ based on the equation $Y(1) = a \cdot x^2 + b \cdot x + c$

350

Send the value of $Y_2$ with the signature

1. Verify the Signature of $Y_2$
2. Perform the authentication process for both $Y_1$ and $Y_2$ based on the proposed 3-D correlation coefficient

360

| $Y_2$ | $Y_1$ |
|---|---|
| 11 | 1 |
| 15 | 5 |
| 16 | 6 |
| 9 | 2 |
| 16 | 6 |
| 18 | 8 |
| 12 | 2 |
| 21 | 9 |
| 14 | 4 |
| 17 | 7 |

Fig. 3a

Send the messages: code, $Y_1$ and its signature

310

ECU

320

1. Verify the Signature of $Y_2$
2. Perform the authentication process for both $Y_1$ and $Y_2$ based on the proposed 3-D correlation coefficient
3. Execute the code message (open the door)

360

Send the acknowledgement to Car Control for current value of counter and Quadrant value

Fig. 3b

EP 4 564 734 A1

Send the messages: code, $Y_1$ and its signature

310

*ECU*

320

1. Verify the Signature of $Y_2$ 😊
2. Perform the authentication process for both $Y_1$ and $Y_2$
   based on the proposed 3-D correlation coefficient✕
3. Execute the code message (open the door) ✕

360

Send the *Error* status to Car Control to reset the communication

Fig. 3c

Fig. 4

500

X

Z

Y

[00, I]

[05, I]

$Y_2$

Counter

$Y_1$

[02, III]

Distance for $Y_1$ and $Y_2$ which shows far discrepancy of correlation for both vectors. This is invalid correlation can be suspected as malicious Vector from Car Controller

Fig. 5

Fig. 6

# EUROPEAN SEARCH REPORT

**Application Number**

EP 23 21 2485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/076603 A1 (LI WENTING [DE] ET AL) 5 March 2020 (2020-03-05) | 1,2, 13-15 | INV. H04L9/06 |
| Y | * paragraph [0023] - paragraph [0036] * * paragraph [0048] - paragraph [0082] * | 3-12 | G06F17/00 H04L9/32 |
| Y | CN 116 886 276 A (BEIJING ZHONGCHAO WEIYE INFORMATION SECURITY TECH CO LTD) 13 October 2023 (2023-10-13) * abstract * | 3-12 | |
| Y | DE 10 2011 079421 A1 (CONTINENTAL AUTOMOTIVE GMBH [DE]) 24 January 2013 (2013-01-24) * abstract * * paragraph [0023] - paragraph [0047] * | 3-12 | |
| Y | WO 2020/006052 A1 (MICRON TECHNOLOGY INC [US]) 2 January 2020 (2020-01-02) * abstract * * paragraph [0020] - paragraph [0023] * | 3-12 | |
| | | | TECHNICAL FIELDS SEARCHED (IPC) |
| Y | JP 2014 178862 A (SECOM CO LTD) 25 September 2014 (2014-09-25) * abstract * | 3-12 | H04L G06F |

The present search report has been drawn up for all claims

| Place of search | Date of completion of the search | Examiner |
|---|---|---|
| Munich | 6 May 2024 | Apostolescu, Radu |

EPO FORM 1503 03.82 (P04C01)

## ANNEX TO THE EUROPEAN SEARCH REPORT
## ON EUROPEAN PATENT APPLICATION NO.

EP 23 21 2485

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | Publication date | Patent family member(s) | | Publication date |
|---|---|---|---|---|
| US 2020076603 A1 | 05-03-2020 | EP | 3669521 A1 | 24-06-2020 |
| | | US | 2020076603 A1 | 05-03-2020 |
| | | US | 2021126790 A1 | 29-04-2021 |
| | | WO | 2020048652 A1 | 12-03-2020 |
| CN 116886276 A | 13-10-2023 | NONE | | |
| DE 102011079421 A1 | 24-01-2013 | NONE | | |
| WO 2020006052 A1 | 02-01-2020 | CN | 112351918 A | 09-02-2021 |
| | | CN | 114900834 A | 12-08-2022 |
| | | EP | 3815055 A1 | 05-05-2021 |
| | | JP | 7157518 B2 | 20-10-2022 |
| | | JP | 7411755 B2 | 11-01-2024 |
| | | JP | 2021528922 A | 21-10-2021 |
| | | JP | 2022179620 A | 02-12-2022 |
| | | KR | 20210014207 A | 08-02-2021 |
| | | US | 2020005570 A1 | 02-01-2020 |
| | | US | 2020226861 A1 | 16-07-2020 |
| | | US | 2021398370 A1 | 23-12-2021 |
| | | WO | 2020006052 A1 | 02-01-2020 |
| JP 2014178862 A | 25-09-2014 | JP | 6222948 B2 | 01-11-2017 |
| | | JP | 2014178862 A | 25-09-2014 |

EPO FORM P0459

For more details about this annex : see Official Journal of the European Patent Office, No. 12/82